# EUROPEAN PATENT APPLICATION

(11) **EP 4 276 588 A1**
(43) Date of publication of application: **15.11.2023**
(21) Application number: 22709546.0
(22) Date of filing: 11.03.2022
(51) Int. Cl.: G06F 3/041, G06F 3/042

(54) **SYSTEM FOR DETECTING AND CORRECTING RECOGNIZED COORDINATES OF INFRARED TOUCH PEN FOR ELECTRONIC BLACKBOARD**

(30) Priority: 08.03.2022 KR 20220029445
(71) Applicant: Able Soft Inc., Changwon-si, Gyeongsangnam-do 51391 (KR)
(72) Inventor: KIM, Bong Hwan, Busan 46539 (KR); KIM, Hyeon Cheol, Gyeongsangnam-do 50986 (KR)
(74) Representative: BCKIP Part mbB
(86) International application number: PCT/KR2022/003418
(87) International publication number: WO 2023/171840

(57) **Abstract**

Disclosed is a system for detecting and calibrating coordinates of infrared touch pen for electronic blackboard. According to the embodiment of the present invention, a system for detecting and calibrating coordinates of infrared touch pen for electronic blackboard includes a laser irradiation unit for irradiating a laser pointer to a predetermined Region 1, a camera photographing unit photographing the Region 1 and display panel, an image analysis unit that analyzes image data captured by the camera photographing unit and determines detection of an infrared touch pen, a touch pen detection unit calculating coordinate information of the infrared touch pen when the infrared touch pen is detected by the image analysis unit, and a coordinate calibration unit for calibrating the coordinate information calculated based on the image data analyzed by the image analysis unit.

## Description

### [Technical Field]

The present invention relates to a system for detecting and calibrating coordinates of infrared touch pen for electronic blackboards, and more particularly, to a system for detecting and calibrating coordinates of electronic blackboard capable of detecting coordinates of user cursor displayed on blackboard and coordinating user cursor and detection error.

### [Background Art]

Recently, the educational environment is changing rapidly due to the digital environment, for example, digital textbooks are spreading, and the educational environmental using various multimedia devices is also spreading rapidly. In addition, electronic blackboards that can easily provide various information instead of existing analog blackboards are being distributed in earnest.

The electronic blackboard can perform various functions necessary for lectures, such as displaying documents of lecture material or presentation contents on the screen and providing writing function. In addition, to perform the various functions mentioned above, a touch of a finger or a pen may be sensed.

However, during lectures, there are cases where the display unit of the electronic blackboard is touched in various ways not only for various necessary function but also for various purposes such as emphasizing the contents of lecture. If the display unit is operated in response to these touches, there may be a problem in that the screen is switched or unnecessary lines or letters are displayed, and thus the lecture may not proceed smoothly.

In this regard, the prior art, Korean Patent Registration No. 10-2014-0124025 discloses an application execution device and method in an unlock window of mobile devices that enable rapid internet search, in addition to protecting personal information by allowing the internet to be searched even without unlocking the lock by placing an activation area in the unlock window while placing a search word input section in the activation area. Furthermore, Korean Patent Registration No. 10-2005-0022557 discloses a remote controller with a touch screen type hot key that deactivates the display unit according to a specific hot key and a control method thereof, by placing hot keys on a display screen and generating a control signal to perform an operation corresponding to the hot key when a user touches the hot key.

However, the technology disclosed in the prior art limits the activation area of the display unit, and it is impossible to solve the problem of preventing it from responding to a touch input during a lecture.

Therefore, there is a need for research on a system for detecting and calibration coordinates of an infrared touch pen for an electronic blackboard to compare the position of the detected cursor by recognizing the cursor generated on the display unit of the electronic blackboard based on the user's motion.

### [Summary of Invention]

### [Problems to be Solved]

The present invention, with a view to solving the above problem, aims to provide a system for detecting and calibrating coordinates of an infrared touch pen for an electronic blackboard capable of more precisely calibrating position information of an infrared touch pen calculated through a camera by irradiating a laser pointer to a preset area outside a display area and calculating distance between laser pointer and infrared touch pen.

In addition, the present invention aims to provide a system for detecting and calibrating coordinates of an infrared touch pen for an electronic blackboard capable of calculating an error of an infrared touch pen by always applying the same criterion, by calculating the fine vibration, movement amount and movement direction of the laser pointer and calibrating the exact position of the laser point, by photographing a laser pointer irradiated to a predetermined area and learning photographed image data.

In addition, the present invention aims to provide a system for detecting and calibrating coordinates of an infrared touch pen for an electronic blackboard capable of inducing detection of errors of infrared touch pens to converge and permanently calibrating detection errors of the infrared touch pen without a separate operation, by calibrating the position of the infrared touch pen using the average value of the detection error of the infrared touch pen.

An object to be achieved by the present invention is not limited to the objects mentioned above, and other objects to be achieved by the present invention may be clearly understood by those skilled in the art from the following description.

### [Solution to Problem]

According to an embodiment of the present invention, a system for detecting and calibrating coordinates of an infrared touch pen for an electronic blackboard, in an electronic blackboard including an infrared touch pen having an infrared light source, a display panel and a beam project for irradiating image content to the display panel, include a laser irradiation unit for irradiating a laser pointer to a predetermined Region 1, a display panel and a camera photographing unit for photographing the Region 1, an image analysis unit that analyzes image data captured by a camera photographing unit and determines whether an infrared touch pen is detected or not, a touch pen detection unit that calculates coordinate information of the infrared touch pen when an infrared touch pen is detected by the image analysis unit, and a coordinate calibrating unit for calibrating coordinate information calculated based on the image data analyzed by the image analysis unit.

In addition, the image analysis unit is characterized in that it includes a laser pointer initialization unit that analyzes the Region 1 to which a laser pointer is irradiated, calculates a moving distance and a moving direction of the laser pointer and sets a real-time position of the laser pointer to an initial value, a touch pen input detection unit tracking light generated by the pen tip of the infrared touch pen and determining the detection of the infrared touch pen when the infrared touch pen is pressed against the display panel and a touch pen distance calculation unit for calculating a distance between a laser pointer in Region 1 and light generated from a pen tip of an infrared touch pen. The coordinate calibrating unit is characterized that it includes the second coordinate generation unit calculating the second coordinate of the infrared touch pen based on the distance calculated by the touch pen distance calculation unit, and a calibration data generation unit that calculates an error between the first coordinate and the second coordinate and generates calibrated data that calibrates the first coordinate using the average of the calculated errors.

In addition, the touch pen detection unit is characterized in that it includes a user cursor generating unit calculating the first coordinate corresponding to the location where the infrared touch pen is detected and generating cursor image at a position corresponding to the first coordinate on the display panel, and the first coordinate calibrating unit that calibrates the first coordinate by reflecting the calibration data generated by the coordinate calibrating unit.

In addition, the coordinate calibrating unit is characterized in that it includes a calibrated data verification unit that groups calibrated data based on a predetermined condition to generate calibrated data sets, and verifies calibrated data based on the last n calibrated date set generated; the calibrated data generating unit determines that the calibration of the first coordinate is completed when the error of the first coordinate and the second coordinate is less than or equal to the minimum value of the predetermined reference error range; the calibrated data verification unit generates calibrated data sets by grouping calibrated data generated within the reference error range before the calibration of the first coordinate is complete, when it is determined that the calibration of the first coordinate is completed by the calibrated data generation unit, allocating a reference number based on the order in which the calibrated data included in the calibrated data sets is generated, comparing n calibrated data sets, calculating the average value of the calibrated data having the same reference number among the calibrated data included in the calibrated data sets, and generating the calibration check data based on the average value; the first coordinate calibration unit performs the initial calibration of calculating the pre-calibrated coordinate calculated using the calibration check data on the first coordinate while performing additional calibration to calculate the final calibration coordinate by applying calibrated data to the pre-calibrated coordinates calculated through the initial calibration; the initial calibration is performed only once when the calibration check data is newly generated, and only additional calibration is performed until the calibrated data generation unit determines that the calibration of the first coordinate is completed.

In addition, the calibrated data generation unit is characterized in that it generates calibrated data based on the second coordinate, but when the error of the first coordinate and the second coordinate exceeds a predetermined reference error range, calibrated data is not generated.

### [Beneficial Effects]

According to the present invention, the system for detecting and calibrating coordinates of infrared touch pen for electronic blackboards has an effect of more precisely calibrating the position information of the infrared touch pen by irradiating a laser pointer to a predetermined area outside the display area and calculating the distance between the laser pointer and the infrared touch pen.

In addition, the system for detecting and calibrating coordinates of infrared touch pen for electronic blackboards has an effect of calculating the error of the infrared touch pen by photographing a laser pointer irradiated to a predetermined area, learning the photographed image data to calculate the fine vibration, movement amount and movement direction of the laser pointer, and calibrating the exact position of the laser pointer.

In addition, the system for detecting and calibrating coordinates of infrared touch pen for electronic blackboards has an effect of permanently calibrating the detection error of the infrared touch pen without separate operation by calibrating the position of the infrared touch pen using the average value of the detection error of the infrared touch pen, inducing the detection error of the infrared touch pen to converge.

### [Simple Explanation of the Drawing]

Figure 1 is a block diagram of a system for detecting and calibrating coordinates of infrared touch pen for electronic blackboards according to an embodiment of the present invention.
Figure 2 is a diagram illustrating an electronic blackboard system to which a system for detecting and calibrating coordinates of infrared touch pen for electronic blackboards according to an embodiment of the present invention is applied.
Figure 3 is a diagram illustrating a camera photographing unit of a system for detecting and calibrating coordinates of infrared touch pen for electronic blackboards according to an embodiment of the present invention.
Figure 4 is a diagram illustrating an image analysis unit of a system for detecting and calibrating coordinates of infrared touch pen for electronic blackboards according to an embodiment of the present invention.
Figure 5 is a diagram illustrating a touch pen detection unit of a system for detecting and calibrating coordinates of infrared touch pen for electronic blackboards according to an embodiment of the present invention.
Figure 6 and 7 are diagrams for explaining a coordinate calibration unit of a system for detecting and calibrating coordinates of infrared touch pen for electronic blackboards according to an embodiment of the present invention.
Figure 8 is a diagram illustrating a calibration data verification unit of a system for detecting and calibrating coordinates of infrared touch pen for electronic blackboards according to an embodiment of the present invention.

### [Details to Implement the Present Invention ]

Hereinafter, a detailed embodiment of the present invention will be described in detail with reference to the drawings. However, the spirit of the present invention is not limited to the presented embodiments, and even though those skilled in the art who understand the spirit of the present invention may easily suggest other degenerative inventions or other embodiments included within the scope of the present invention through addition, change, deletion of other components within the scope of the same spirit, this will also be said to be included within the scope of the present invention.

In addition, components having the same function within the scope of the same spirit shown in the drawings of each embodiment will be described using the same reference mark.

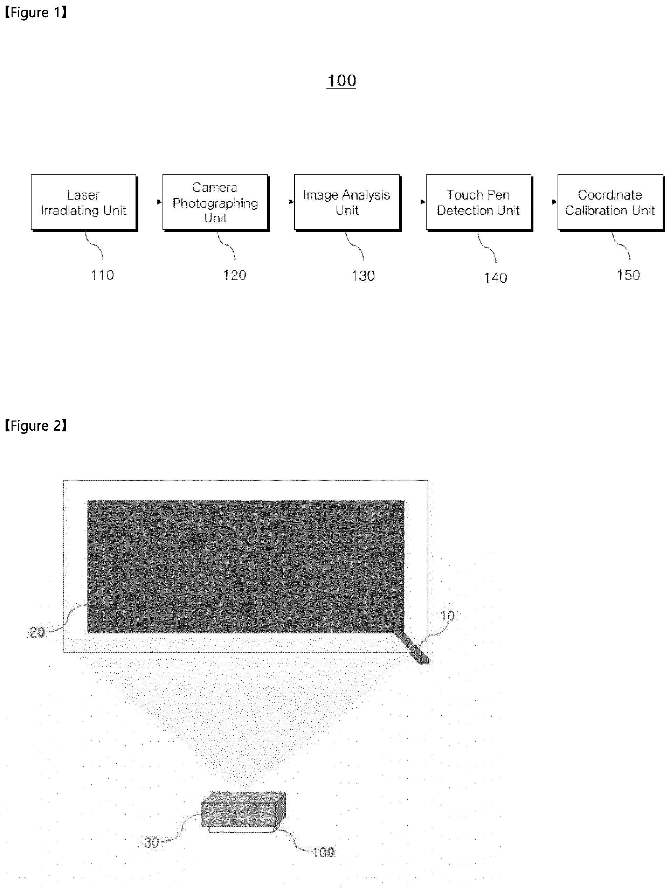

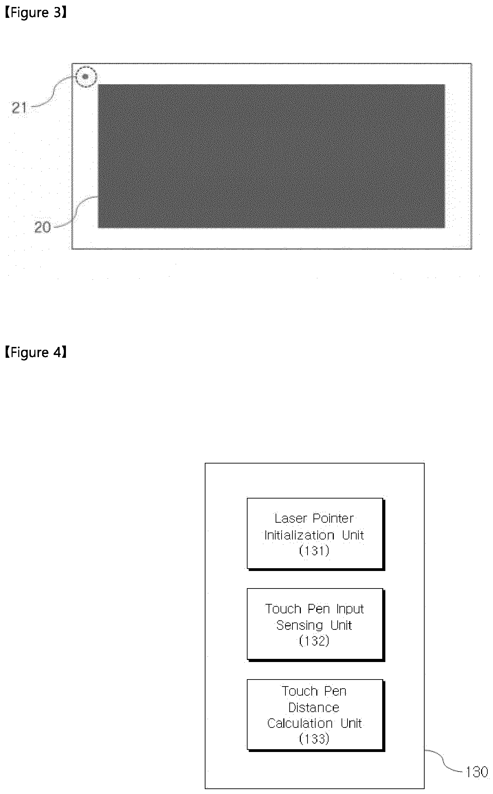

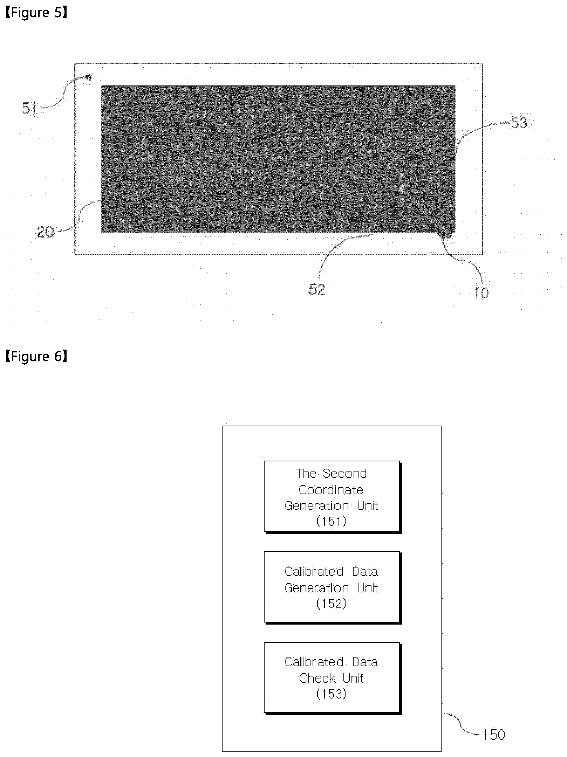

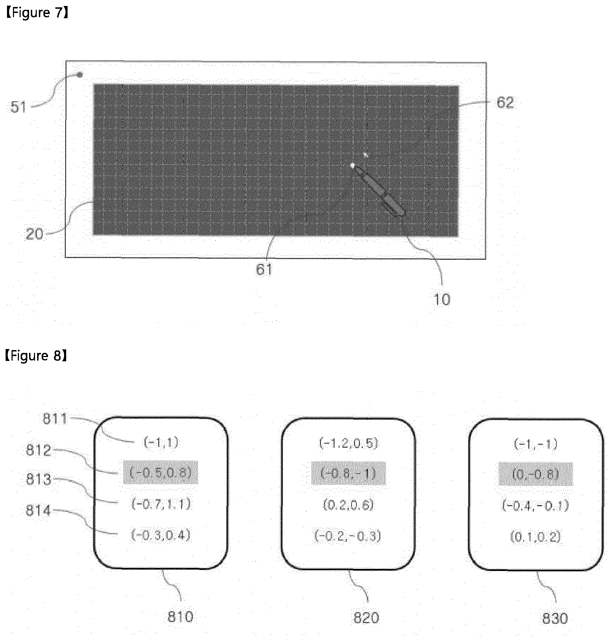

Figure 1 is a block diagram of a system for detecting and calibrating coordinates of infrared touch pen for electronic blackboards according to an embodiment of the present invention; Figure 2 is a diagram illustrating an electronic blackboard system to which a system for detecting and calibrating coordinates of infrared touch pen for electronic blackboards is applied; Figure 3 is a diagram illustrating a camera photographing unit of a system for detecting and calibrating coordinates of infrared touch pen for electronic blackboard according to an embodiment of the present invention; Figure 4 is a diagram illustrating an image analysis unit of a system for detecting and calibrating coordinates of infrared touch pen for electronic blackboards according to an embodiment of the present invention; Figure 5 is a diagram illustrating a touch pen detection unit of a system for detecting and calibrating coordinates of infrared touch pen for electronic blackboards according to an embodiment of the present invention; Figure 6 and 7 are diagrams for explaining a coordinate calibration unit of a system for detecting and calibrating coordinates of infrared touch pen for electronic blackboard according to an embodiment of the present invention; and Figure 8 is a diagram illustrating a calibration data verification unit of a system for detecting and calibrating coordinates of infrared touch pen for electronic blackboard according to an embodiment of the present invention.

### <Embodiment 1 >

Referring to Figure 1 and 2, in an electronic blackboard including an infrared touch pen(10) having an infrared light source, a display panel(20) and a beam project(30) for irradiating image content of the display panel(20), a system for detecting and calibrating coordinates of infrared touch pen for electronic blackboard(100) according to an embodiment of the present invention may include a laser irradiation unit(110), a camera photographing unit(120), an image analysis unit(130), a touch pen recognition unit(140) and a coordinate calibration unit(150).

More specifically, the laser irradiation unit(110) irradiates a laser pointer to a predetermined Region 1, the camera photographing unit(120) photographs the Region 1 and the display panel(20), the image analysis unit(130) analyzes image data captured by the camera photographing unit(120) and determines whether the infrared touch pen(10) is recognized, the touch pen recognition unit(140) calculates coordinate information of the infrared touch pen(10) when the infrared touch pen(10) is detected by the image analysis unit(130), and the coordinate calibration unit(150) may correct the coordinate information based on the image data analyzed by the image analysis unit(130).

For example, a system for detecting and calibrating coordinates of infrared touch pen for electronic blackboards may be provided in a form coupled to the beam projector (30).

Meanwhile, referring to Figure 3, the camera photographing unit(120) photographs the display panel(20) and the Region 1(21) to which the laser pointer is irradiates, the Region 1(21) may be adjusted along a position at which the laser pointer is irradiated.

Referring to Figure 4, the image analyzing unit(130) may include a laser pointer initialization unit(131) that analyzes the Region 1(21) to which the laser pointer is irradiated, calculates the movement amount and movement direction of the laser pointer, and sets the real-time position of the laser pointer, a touch pen input sensing unit(132) tracking light generated by the pen tip of the infrared touch pen(10) and determining whether the infrared touch pen(10) is recognized when the infrared touch pen(10) is pressed against the display panel(20), and a touch pen distance calculation unit(131) for calculating a distance between the laser pointer of the Region 1 (21) and light generated from a pen tip of the infrared touch pen(10).

In addition, referring to Figure 5, the touch pen recognition unit (140) may include the user cursor generation unit(141) that calculates the first coordinate corresponding to the position where the infrared touch pen(10) is detected and generates a cursor image at a position corresponding to the first coordinate on the display panel(20) when the infrared touch pen(10) is detected by the touch pen input sensing unit(132), and the first coordinate calibration unit(142) that corrects the first coordinate by reflecting the calibration data generated by the coordinate calibration unit(150).

In this case, even if the exact position of the infrared touch pen (10) is recognized, the first coordinate may be calculated to be at a position other than a coordinate at which the infrared touch pen (10) is actually located due to a fallacy or accumulated error on the program.

Therefore, the coordinate calibration unit (140) may generate calibration data for calibrating the first coordinate so that accurate coordinates may be calculated based on the actual position of the infrared touch pen(10).

More specifically, referring to Figure 6 and 7, the coordinate calibration unit (150) includes a second coordinate generation unit (151) for calculating the second coordinate of the infrared touch pen (10) based on the distance calculated by the touch pen distance calculation unit (133), and a calibration data generation unit (152) that calculates an error between the first coordinate and the second coordinate while generating calibration data for calibrating the first coordinate using an average of the calculated errors.

For example, even though the position of the infrared touch pen (10) photographed by the camera photographing unit (12) is the Position 1(52), the cursor image as above may be generated at the Position 2(53) because the detection coordinate of the infrared touch pen (10) calculated by the touch pen detection unit (130) are calculated as the Position 2(53).

In this case, in order to calibrate the cursor image to be generated at the Position 1(52) corresponding to the exact position of the infrared touch pen (10), the coordinate calibration unit (150) may calculate the second coordinate based on a distance between the laser pointer (51) calculated by the touch pen distance calculation unit (133) and a position of the light (52) generated at a pen tip of the infrared touch pen (10).

In addition, the coordinate calibration unit (150) may calculate an error between the first coordinate and the second coordinate while setting an average value of the calculated error as the calibration data.

For example, the touch pen detection unit (140) may calculate the first coordinate by setting the vertex of the upper left end of the display panel (20) as the origin (not shown).

In addition, the coordinate calibration unit (150) calculates the second coordinate based on a distance between the laser pointer (51) calculated by the touch pen distance calculation unit (133) and the position of light (52) generated at the pen tip of the infrared touch pen (10), and the second coordinate may be calculated based on a distance between the laser pointer (51) and the origin (not shown) of the display panel (20).

Meanwhile, the touch pen detection unit (140) may further include the first coordinate calibration unit (142) that calibrates the first coordinate by reflecting the calibration data generated by the coordinate calibration unit (150).

For example, when the display panel (20) is set to an X-Y plane, the second coordinate, which are the actual input position of the infrared touch pen (10) is (23, -10), and the coordinate calibration unit (150) may generate calibrated data of (-1, -1) instructing the coordinate calibration unit (150) to move by -1 on the X axis and -1 on the Y axis when the first coordinate of the infrared touch pen (10) calculated by the touch pen detection unit (140) is (24, -9).

In addition, the first coordinate calibration unit (142) may calibrate the first coordinate by applying the calibration data to the first coordinate of the infrared touch pen (10) detected after the calibrated data is generated.

In other words, in case that the first coordinated calculated for the second time at the touch pen detection unit (140) is (10, -5), the first coordinate may be calibrated to (9, -6) and output by applying calibrated data of (-1, -1) generated at the coordinate calibration unit (150).

In this case, when the second coordinate, which is the actual input position of the infrared touch pen (10), is (9, -8), the calibrated data may be regenerated to (-0.5, -1.5), which is the average value of errors. Accordingly, as errors with respect to the X-axis and the Y-axis accumulate, the calibrated data may be changed to a form converging to zero.

At this time, while the calibration data generation unit (152) generates the calibrated data based on the second coordinate, the calibrated data may not be generated when an error between the first coordinate and the second coordinate exceeds a predetermined reference error range.

In other words, the calibration data generation unit (152) determines the first coordinate calculated through the infrared touch pen (10) as noise when the first coordinate exceeds the maximum value of the reference error range. When the reference error range is less than the minimum value, it may be determined that the calibration of the first coordinate is completed.

Meanwhile, the coordinate calibration unit (150) may further include the calibrated data verification unit (153) that generates a calibrated data set by grouping the calibrated data based on a predetermined condition and verifies the calibrated data based on the n last generated calibrated data sets.

More specifically, the calibrated data generation unit (152) determines that the calibration of the first coordinate is completed when the error of the first coordinate and the second coordinate is less than or equal to a minimum value of a predetermined reference error range; and the calibrated data verification unit (153) may generate the calibrated data set by grouping the calibrated data generated within the reference error range before the calibration of the first coordinate is completed when it is determined that the calibration of the first coordinate is completed by the calibrated data generation unit (152).

In addition, the calibrated data verification unit (153) allocates a reference number based on the order in which the calibrated data included in the calibrated data set is generated, and compares the n calibrated data sets, while generating calibration check data based on the average value of the calibrated data having the same reference number among the calibrated data included in the calibrated data set.

More specifically, as illustrated in Figure 8, the calibrated data verification unit (153) allocates reference numbers (811, 812, 813, 814) based on the order in which the calibrated data included in the calibrated data set (810, 820, 830) are generated, compares the n calibrated data sets, calculates the average value of the calibrated data having the same reference number among the calibrated data included in the calibrated data set, and generates calibration check data based on that average value.

For example, when the calibration check data is generated using the last 3 calibrated data sets (810, 820, 830) generated, the calibration check data may be calculated as an average value of the second calibrated data (812) included in the first calibrated data set (810) and the second calibrated data (not shown) included in the third calibrated data set (830).

Accordingly, (-0.4, -0.33), the average value of the second calibrated data (-0.5, 0.8), (-0.8, -1) and (0, - 0.8) of the three calibrated data sets above (810, 820, 830), may be calculated as the calibration check data

In addition, the first coordinate calibration unit (142) performs the initial calibration of calculating the pre-calibrated coordinates calculated using the calibration check data on the first coordinates, and additional calibration for calculating the final calibration coordinates may be performed by applying the calibrated data to the pre-calibrated coordinates calculated through the initial calibration.

In this case, when the calibration check data is newly generated, the above initial calibration is performed only once, and only the additional calibration may be performed until the calibrated data generation unit (153) determines that the calibration of the first coordinate is completed.

In other words, the initial calibration is performed only once immediately after the calibration check data is generated by the calibrated data verification unit (153), and the coordinate calibration unit (150) generates the calibration data to calibrate the first coordinate by performing only an additional calibration step of calibrating the first coordinate by the calibrated data until the calibrated data generation unit (152) determines that the calibration of the first coordinate is completed; and then a calibration process is performed over two steps using the calibration check data generated by the calibrated data verification unit (153) making it possible to reduce the amount of data calculation required to complete the calibration of the first coordinate.

For example, the image analysis unit (130) controls the initial detection value setting of the infrared touch pen (10) based on the image data captured by the camera photographing unit (120), and the detection sensitivity of detecting the infrared touch pen (10) may be adjusted by detecting light generated from the pen tip by the infrared touch pen (10) being pressed more than a predetermined number of times.

In this case, the image analysis unit (130) measures the amount of light generated by the pen tip of the infrared touch pen (10), and it may be determined that the infrared touch pen (10) is not detected when the measured amount of light is less than a pre-determined reference value.

As another example, the image analyzing unit (130) measure a light emission time of light generated from a pen tip of the infrared touch pen (10), and it is possible to fix Y-axis coordinate value of the first coordinate when the light emission time is equal to or greater than a predetermined first reference time.

For example, when the user writes to the display panel (20) using the infrared touch pen (10), the image analysis unit (130) determines that the light generated from the pen tip of the infrared touch pen (10) is equal to or greater than the first reference time when the infrared touch pen (10) is pressed against the display panel (20) for 5 seconds or more, the Y-axis coordinate of the first coordinate is fixed to a Y-coordinate value of the first coordinate detected for the first time when the user starts writing, and only the calibration for the X-axis coordinate of the first coordinate may be performed.

Accordingly, when the user continuously writes, the handwritten image on the display panel (20) may be generated while maintaining a horizontal state.

In addition, when the user wants to change the fixed value of the Y-axis coordinate of the first coordinate, it is possible to change the fixed value of the Y-axis coordinates by starting writing after pressing the infrared touch pen (10) again on the display panel (20) for the first reference time or more, or the user may release the fixed coordinate of the Y-axis of the first coordinate by continuously pressing twice to the display panel (20) for a predetermined second reference time if he or she wants to release the fixed coordinate of Y-axis of the first coordinate.

According to the above-described effect of the present invention, by irradiating laser pointer to the predetermined area outside the display area and calculating the distance between the laser pointer and the infrared touch pen, a system for detecting and calibrating coordinates of infrared touch pen for electronic blackboard capable of more precisely calibrating position information of the infrared touch pen calculated through a camera may be provided.

In addition, by photographing laser pointer irradiated to the predetermined area, calculating the fine vibration, movement amount and movement direction of the laser pointer by learning the captured image data and calibrating the exact position of the laser pointer, a system for detecting and calibrating coordinates of infrared touch pen for electronic blackboard capable of calculating the error of the infrared touch pen by applying the same criteria, may be provided.

In addition, by calibrating the position of the infrared touch pen using the average value of the detection error of the infrared touch pen, a system for detecting and calibrating coordinates of infrared touch pen for electronic blackboard capable of inducing detection errors of the infrared touch pen to converge and permanently calibrating the detection error of the infrared touch pen without a separate operation.

In addition, according to an embodiment of this invention, a control method of a system for detecting and calibrating coordinates of infrared touch pen for electronic blackboard may be recorded on a computer readable medium including program instructions for performing various computer-implemented operations. The computer-readable medium may include a program command, a data file, a data structure alone or in combination. The medium may be program instructions specifically designed and configured for the present invention or known to and usable by those skilled in the art. Examples of computer-readable recording media include magnetic media such as hard disks, floppy disks and magnetic tapes, optical media such as CD-ROM and DVD, magneto-optical media such as floptical disk and hardware devices specifically configured to store and perform program commands such as ROM, RAM, flash memory. Example of program instructions include machine language codes, such as those created by compilers, as well as advanced language codes that can be executed by computers using interpreters and so on.

Although the configuration and characteristics of the present invention have been described above based on an embodiment according to the present invention, the present invention is not limited thereto, and it is apparent to those skilled in the art that the present invention belongs to, that various changes or modifications may be made within the spirit and scope of the present invention; therefore, it should be noted that such changes or modifications fall within the scope of the appended claims.

### [Description of Signs]

10 : Infrared Touch Pen
20 : Display Panel
30 : Beam Projector
110 : Laser Irradiating Unit
120 : Camera Photographing Unit
130 : Image Analysis Unit
131 : Laser Pointer Initialization Unit
132 : Touch Pen Input Sensing Unit
133 : Touch Pen Distance Calculation Unit
140 : Touch Pen Detection Unit
141 : User Cursor Generation Unit
142 : The First Calibration Unit
150 : Coordinate Calibration Unit
151 : The Second Coordinate Generation Unit
152 : Calibrated Data Generation Unit
153 : Calibrated Data Check Unit

## Claims

1. Electronic blackboard including an infrared touch pen having an infrared light source, a display panel, and a beam project for irradiating image contents to the display panel, a system for detecting and calibrating coordinates of infrared touch pen for electronic blackboard includes,
a laser irradiation unit for irradiating a laser pointer to a predetermined Region 1; a display panel and a camera photographing unit that photographs the Region 1;
an image analysis unit that analyzes image data captured by the camera photographing unit and determines whether an infrared touch pen is detected;
a touch pen detection unit calculating coordinate information of the infrared touch pen when the infrared touch pen is detected by the image analysis unit; and
a coordinate calibration unit for calibrating the coordinate information calculated based on the image data analyzed by the image analysis unit.

2. Electronic blackboard according to claim 1,
wherein the image analysis unit above includes,
a laser pointer initialization unit that analyzes the first region to which the laser pointer is irradiated, calculates a moving distance and a moving direction of the laser pointer and sets a real-time position of the laser pointer to an initial value;
a touch pen input sensing unit that tracks light generated by a pen tip of the infrared touch pen and determines whether the infrared touch pen is detected or not, when the infrared touch pen is pressed against the display panel; and
a touch pen distance calculation unit for calculating a distance between the laser pointer of the first area and light generated from a pen tip of the infrared touch pen;
wherein the coordinate calibration unit above is a system for detecting and calibrating coordinates of the infrared touch pen for electronic blackboard, **characterized by** including
a second coordinate generation unit that calculates the second coordinate of the infrared touch pen based on the distance calculated by the touch pen distance calculation unit; and
a calibrated data generation unit that calculates an error between the first coordinate and the second coordinate and generates calibrated data calibrating the first coordinate using an average of the calculated errors.

3. Electronic blackboard according to claim 2,
wherein touch pen detection unit above is a system for detecting and calibrating coordinates of infrared touch pen for electronic blackboard, **characterized by** including
an user cursor generation unit that calculates the first coordinate corresponding to a position where the infrared touch pen is detected, when the infrared touch pen is detected by the touch pen input sensing unit, and generates a cursor image at a position corresponding to the first coordinate on the display panel; and
the first coordinate calibration unit that calibrates the first coordinate by reflecting the calibration data generated by the coordinate calibration unit.

4. Electronic blackboard according to claim 3,
wherein the coordinate calibration unit above is a system for detecting and calibrating coordinates of the infrared touch pen for the electronic blackboard, **characterized by** further including
a calibrated data check unit that groups the calibrated data based on a predetermined condition to generate calibrated data sets and verifies the calibrated data based on the n last calibrated data sets generated; and
the calibrated data generation unit above determines that
the calibration of the first coordinate is completed when an error between the first coordinate and the second coordinate is less than or equal to a minimum value of a predetermined reference error range; and wherein
the calibrated data check unit above,
generates the calibrated data set by grouping the calibrated data generated within the reference error range before the calibration of the first coordinate is completed in case where it is determined that the calibration of the first coordinate is completed by the calibrated data generation unit,
allocates a reference number based on the order in which the calibrated data included in the calibrated data set and compares n calibrated data set above,
generates the calibration check data based on the average value of calibrated data having the same reference number among the calibrated data included in the calibrated data set,
wherein the first coordinate calibration unit,
performs the initial calibration for calculating the pre-calibrated coordinates calculated using the calibration check data on the first coordinates,
performs an additional calibration for calculating a final calibration coordinate by applying the calibrated data to the pre-calibrated coordinates calculated through the initial calibration,
performs the initial calibration only once when the calibration check data is newly generated, and
performs only the additional calibration until it is determined that the calibration of the first coordinate is completed at the calibrated data generation unit.

5. Electronic blackboard according to claim 2,
wherein the calibrated data generation unit above is a system for detecting and calibrating coordinates of infrared touch pen for electronic blackboard, **characterized by**,
generating the calibrated data based on the second coordinate, but not generating the calibrated data when an error between the first coordinate and the second coordinate exceeds a predetermined reference error range.
